# EUROPÄISCHE PATENTANMELDUNG

(11) **EP 0 724 091 A1**
(43) Veröffentlichungstag der Anmeldung: **31.07.1996**
(21) Anmeldenummer: 96100927.1
(22) Anmeldetag: 23.01.1996
(51) Int. Cl.: F16F 13/10, F16F 13/26

(54) **Motorlager mit steuerbarer Steifigkeit**

(30) Priorität: 25.01.1995 DE 19502242
(71) Anmelder: Metzeler Gimetall AG, D-64744 Breuberg (DE)
(72) Erfinder: Hofmann, Manfred, D-65597 Hünfelden (DE)
(74) Vertreter: Preissner, Nicolaus, Dipl.-Ing.

(57) **Zusammenfassung**

Bei einem Motorlager mit einer hohlzylindrischen Tragfeder (1) aus einem Elastomer, die zwischen zwei Lagerplatten (4,6) eingespannt ist, schließt sich an die untere Lagerplatte (6) ein topfförmiges Gehäuse (7) an. Die Innenwandungen der hohlzylindrischen Tragfeder (1) und des topfförmigen Gehäuses (7) bilden einen Innenhohlraum, der durch eine querverlaufende Wandung (10) in eine obere Kammer (8) und in eine untere Kammer (9) unterteilt wird. Die querverlaufende Wandung (10) ist mit mindestens einer die Kammern 8,9 verbindenden Überströmöffnung (14) versehen. Durch die mit Flüssigkeit gefüllten Kammern (8,9) wird eine zusätzliche hydraulische Dämpfung erzielt. Um bei einem derartigen Motorlager eine steuerbare Steifigkeit vorzusehen, ist in dem topfförmigen Gehäuse (7) eine Anschlagplatte (18) mit einer Öffnung (19) vorgesehen, an die steuerbar eine am topfförmigen Gehäuse (7) elastisch befestigte Steuerplatte (25) anlegbar ist.

## Beschreibung

Die Erfindung betrifft ein Motorlager mit einer hohlzylinderförmigen Tragfeder aus einem Elastomer, die zwischen zwei Lagerplatten eingespannt ist, einem sich an die untere Lagerplatte anschließenden topfförmigen Gehäuse, einem Innenhohlraum, der durch die Innenwandungen der hohlzylinderförmigen Tragfeder und des topfförmigen Gehäuses gebildet ist, einer querverlaufenden, elastischen Wandung, die den Innenhohlraum in eine obere Kammer und eine unter Kammer unterteilt und randseitig eingespannt ist, einem zentral im Innenhohlraum verlaufenden Bolzen, der mit der oberen Lagerplatte und der quer verlaufenden Wandung verbunden ist, wobei die Kammern zur zusätzlichen hydraulischen Dämpfung mit Flüssigkeit gefüllt sind und die elastische Wandung mit einer die Kammern verbindenden Überströmöffnung versehen ist.

Ein derartiges Motorlager ist aus der DE 4131771A1 bekannt. Hierbei weist die elastische Tragfeder eine gute Dämmung im akustischen Bereich, insbesondere für Körperschall, auf. Durch die hydraulische Dämpfung werden niederfrequente Schwingungen großer Amplituden durch das Motorlager aufgenommen. Zur Hochfrequenzentkopplung ist der zentrale Bolzen mit einer ringförmigen Panscherplatte versehen, die in der flüssigkeitsgefüllten Kammer angeordnet ist und die eine Absenkung der dynamischen Steifigkeit bei hohen Frequenzen bewirkt.

In bestimmten Fahrzuständen eines Fahrzeuges ist es wünschenswert, die Steifigkeit eines derartigen Motorlagers an die Erfordernisse anzupassen. Beispielsweise ist es wünschenswert, die statische Steifigkeit des Lagers im Leerlauf weich zu gestalten, während bei anderen Fahrzuständen, eher eine harte Einstellung und zusätzliche Dämpfung vorteilhaft ist.

Ausgehend hiervon liegt der Erfindung die Aufgabe zugrunde, ein Motorlager der eingangs genannten Art zu schaffen, dessen Steifigkeit steuerbar ist.

Zur Lösung dieser Aufgabe ist erfindungsgemäß vorgesehen, daß in dem topfförmigen Gehäuse eine querverlaufende, mit einer Öffnung versehene Anschlagplatte vorgesehen ist, an die steuerbar eine am topfförmigen Gehäuse elastisch befestigte Steuerplatte anlegbar ist.

Durch die erfindungsgemäße Ausgestaltung wird erreicht, daß die Steifigkeit des Motorlagers abhängig von der Stellung der Steuerplatte steuerbar bzw. schaltbar ist. Hierbei verändert die Steuerplatte das Innenvolumen des topfförmigen Gehäuses. In einer ersten Stellung, in der die Steuerplatte an der Anschlagplatte anliegt und deren Öffnung verschließt, wird eine hohe Steifigkeit erreicht. In dieser Stellung der Steuerplatte liegt ein passives Einkammer-Hydrolager vor. In einer zweiten Stellung der Steuerplatte , in der die Steuerplatte an der Unterseite des topfförmigen Gehäuses anliegt und somit von der Anschlagplatte entfernt ist, ist die Steifigkeit des Hydrolagers reduziert und es steht im wesentlichen das ganze Volumen des topfförmigen Gehäuses zur Verfügung.

Prinzipiell ist es möglich, die Steuerung der Steuerplatte so zu gestalten, daß diese noch einen gewissen Freiweg aufweist und somit eine hydraulische Entkopplung kleiner Erregeramplituden bewirkt.

Vorteilhafte Ausgestaltungen der Erfindung ergeben sich aus den Unteransprüchen.

In weiterer Ausgestaltung wird vorgeschlagen, daß die Steuerplatte randseitig einen Elastomerring aufweist, der formschlüssig zwischen der Anschlagplatte und dem topfförmigen Gehäuse verspannt ist. Zweckmäßig ist das topfförmige Gehäuse mit einer ringförmigen Einschnürung versehen, die der Einspannung des Elastomerringes dient.

Vorteilhaft ist die Steuerplatte hydraulisch oder pneumatisch steuerbar. Anstatt mit Überdruck und Entlastung zu steuern, ist es prinzipiell auch möglich, mit reduziertem Druck und Unterdruck zu arbeiten. Hierbei können, um eine hydraulische Entkopplung kleiner Erregeramplituden zu bewirken, die Drücke so eingestellt werden, daß die Steuerplatte noch einen gewissen Freiweg aufweist.

Zweckmäßig ist an dem topfförmigen Gehäuse eine Öffnung für die Steuerflüssigkeit vorgesehen.

Vorteilhaft weist die Tragfeder in mehreren Ebenen angeordnete, radial verlaufende Kanäle auf, die randseitig offen sind und eine venturiförmige Querschnittsform besitzen. Hierdurch kommen beim Zusammenpressen der Tragfeder in achsialer Richtung nacheinander zunehmend gegenüberliegende Wandungen eines Kanals miteinander in Berührung, wodurch ein sanfter Anstieg der Ferderkennlinie gegeben ist. Es ist jedoch auch möglich, übliche Tragfedergeometrien für Hydrolager mit der erfindungsgemäßen Steuerung der Steifigkeit zu kombinieren.

In weiterer Ausgestaltung wird vorgeschlagen, daß die elastische Wandung einen verdickten, mittleren am Bolzen festgelegten Bereich mit mindestens einer achsial verlaufenden Überströmöffnung und im radial äußeren Bereich eine flexible, auswölbbare Wandung aufweist, die mit geringerer Stärke, jedoch hoher Volumensteifigkeit ausgebildet ist.

Um eine Hochfrequenzentkopplung zu erreichen, kann der zentrale Bolzen etwa auf halber Höhe mit einer ringförmigen, radial abragenden Platte versehen sein, die am Außenumfang einen Spalt vorgegebener Breite zum Innenmantel der hohlzylindrischen Tragfeder freiläßt. Durch die in der flüssigkeitsgefüllten Kammer angeordnete Platte wird die Steifigkeit bei hohen Frequenzen reduziert.

Nachfolgend wird die Erfindung anhand eines in schematischer Weise in der Zeichnung dargestellten Ausführungsbeispieles näher erläutert. Hierin zeigen:
- Figur 1: Einen Längsschnitt durch ein erfindungsgemäßes Motorlager in einer ersten Steuerstellung, in der die Steuerplatte an der Anschlagplatte anliegt, und
- Figur 2: das Motorlager gemäß Figur 1 in einer zweiten Steuerstellung, in der die Steuerplatte von der Anschlagplatte entfernt ist.

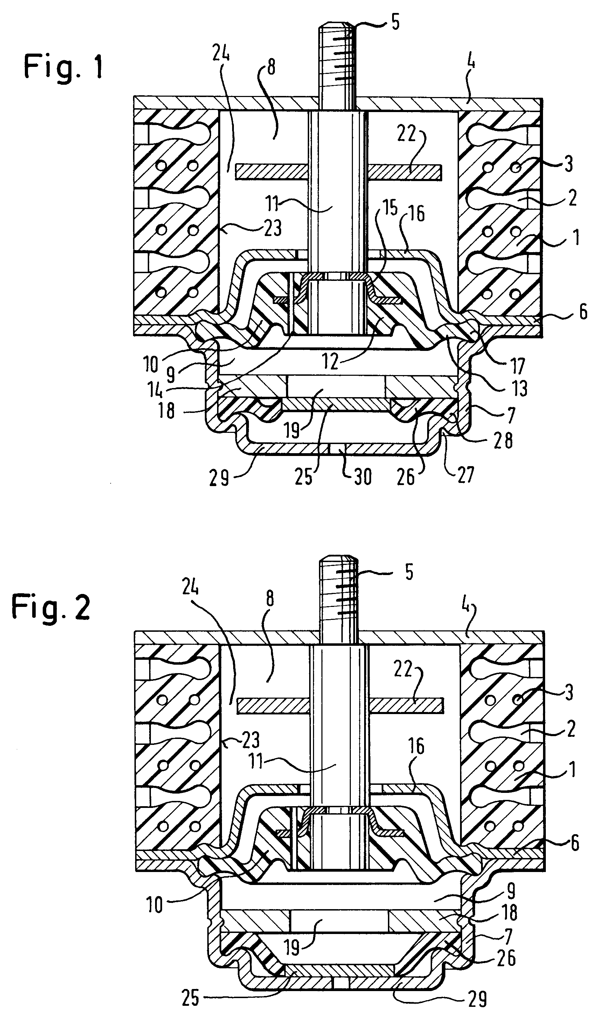

Figur 1 zeigt einen Längsschnitt durch ein erfindungsgemäßes Motorlager, das eine hohlzylinderförmige Tragfeder aus einem Elastomer aufweist. Die Tragfeder 1 besitzt in mehreren beabstandeten Ebenen angeordnete, radiale Kanäle, die jeweils einen venturiförmigen Querschnitt aufweisen. Zwischen den Ebenen mit radial ausgerichteten Kanälen 2 sind parallel zueinander angeordnete Kanäle 3 mit kreisförmigen Querschnitt vorgesehen. Durch die Kanäle 2 und 3 wird erreicht, daß beim Zusammenpressen der Tragfeder in axialer Richtung nacheinander zunehmend gegenüberliegende Wandungen eines Kanals miteinander in Berührung kommen und damit ein sanfter Anstieg der Federkennlinie gegeben ist.

Die hohlzylinderförmige Tragfeder 1 ist zwischen zwei Lagerplatten 4,6 verspannt. An die untere Tragplatte 6 schließt sich ein topfförmiges Gehäuse 7 an, das koaxial zur Tragfeder 1 ausgebildet ist. Die Innenwandungen 23 der Tragfeder 1 und des topfförmigen Gehäuses 7 begrenzen einen Innenhohlraum, in dessen Zentrum ein Bolzen 11 koaxial angeordnet ist. Der mittige Bolzen 11 ist endseitig mit einem Gewindebolzen 5 ausgebildet, der die obere Lagerplatte 4 durchdringt und der Festlegung an einem nicht dargestellten Motor dient. Demgegenüber ist die untere Lagerplatte 6 zur Festlegung an der Karosserie des Fahrzeuges ausgebildet. Die untere Lagerplatte 6 und das topfförmige Gehäuse 7 sind demgegenüber an der Karosserie des nicht dargestellten Fahrzeuges festgelegt.

An seinem, dem Gewindebolzen 5 gegenüberliegenden Ende ist der Bolzen 11 mit einer querverlaufenden, elastischen Wandung 10 versehen, die den Innenhohlraum in eine obere Kammer 8 und in eine untere Kammer 9 unterteilt. Die elastische Wandung 10 besitzt einen mittleren verdickten und im wesentlichen zylindrischen Bereich 12. Die Festlegung der elastischen Wandung 10 erfolgt mittels einer topfförmigen Halteplatte 15, die an dem Bolzen 11 gesichert ist. An diesem mittleren Bereich 12 schließt sich in Radialrichtung ein außenliegender Bereich 13 an, der eine geringere Stärke aufweist. Randseitig ist die querverlaufende Wandung 10 mit einem verdickten Randbereich 17 ausgebildet, der zwischen der unteren Lagerplatte 6 und den topfförmigen Gehäuse 7 eingespannt ist.

In den mittleren Bereich 12 der querverlaufenden Wandung 10 sind die Kammern 8, 9 verbindende Überströmöffnungen 14 vorgesehen, die in Axialrichtung verlaufen. Zweckmäßig sind hierbei zwei bis vier kanalförmige Überströmöffnungen 14 am Umfang verteilt angeordnet.

Die untere Lagerplatte 6 ist im mittleren Bereich des Motorlagers mit einer tassenförmigen Aufwölbung 16 ausgebildet, die den mittleren Bereich 12 der elastischen Wandung 10 mit Abstand umgibt.

Im Innern des topfförmigen Gehäuses 7 ist etwa in mittlerer Höhe eine Anschlagplatte 18 vorgesehen, die in Radialrichtung verläuft. Die Anschlagplatte ist an der Innenwandung des topfförmigen Gehäuses 7 festgelegt und gegenüber dieser abgedichtet. In ihrem mittleren Bereich weist die querverlaufende Anschlagplatte 18 eine Öffnung 19 auf. Die Anschlagplatte 18 unterteilt somit die untere Kammer 9 in zwei Bereiche mit etwa gleichem Volumen.

Unterhalb der Anschlagplatte 18 ist eine Steuerplatte 25 vorgesehen, die parallel zur Anschlagplatte ausgerichtet ist. Randseitig weist die Steuerplatte 25 einen Elastomerring 26 auf, der zwischen der Anschlagplatte 18 und einer an dem topfförmigen Gehäuse vorgesehenen Einschnürung formschlüssig verspannt ist. Hierzu weist der Elastomerring 26 einen verdickten Randbereich 28 auf.

Das topfförmige Gehäuse 7 ist mit einer querverlaufenden Bodenplatte 29 ausgebildet, in der mittig eine Öffnung 30 für ein die Steuerplatte 25 betätigendes Steuermedium vorgesehen ist.

Im Bereich der oberen Kammer 8 ist der Bolzen 11 mit einer querverlaufenden Platte 22 versehen, die der Hochfrequenzentkopplung dient. Die Bemessung der Platte 22 erfolgt derart, daß zwischen deren Außenrand und der Innenwandung 23 der Tragfeder 1 ein Spalt 24 gebildet wird.

Wie aus den Figuren 1 und 2 hervorgeht, kann die Steuerplatte 25 abhängig von dem vorliegenden Steuerdruck gesteuert oder geschaltet werden. Bei dem dargestellten Ausführungsbeispiel erfolgt die Steuerung der Steuerplatte 25 pneumatisch. Prinzipiell ist es jedoch auch möglich, daß die Verstellung der Steuerplatte 25 auf hydraulischem Wege erfolgt.

Figur 1 zeigt die Steuerplatte 25 in einer ersten Stellung, bei der die Steuerplatte 25 an der Anschlagplatte 18 anliegt und die Öffnung 19 verschließt. In dieser Stellung der Steuerplatte 25 liegt ein Motorlager mit hoher Steifigkeit vor. Das Motorlager arbeitet wie ein passives Einkammer-Hydrolager. Die statische Steifigkeit des Motorlagers wird durch die Steifigkeit der Tragfeder 1 und durch die Volumensteifigkeit der hydraulischen Dämpfung bestimmt. Die als Panscher wirkende Platte 22 bewirkt eine Hochfrequenzentkopplung.

Die in Figur 2 dargestellte Stellung der Steuerplatte 25 wird dadurch erreicht, daß der Druck des Steuermediums vermindert wird. In dieser Stellung liegt die Steuerplatte 25 an dem Bodenbereich 29 des topfförmigen Gehäuses 7 an. Die Öffnung 19 der Anschlagplatte 18 ist freigegeben, so daß die untere Kammer 9 ein größeres Volumen aufweist. Da der Druck in der oberen Kammer verringert ist, wird die Steifigkeit des Motorlagers reduziert.

Die Druckbeaufschlagung der Steuerplatte 25 kann derart ausgelegt sein, daß die Steuerplatte 25 noch einen gewissen Freiweg aufweist und somit eine hydraulische Entkopplung kleiner Erregeramplituden bewirkt.

Somit liegt ein Motorlager vor, dessen Steifigkeit abhängig von den vorliegenden Fahrzuständen steuerbar oder schaltbar ist. Hierdurch erschließt sich dem Motorlager ein sehr breites Anwendungsfeld.

## Patentansprüche

1. Motorlager mit einer hohlzylinderförmigen Tragfeder (1) aus einem Elastomer, die zwischen zwei Lagerplatten (4,6) eingespannt ist, einem sich an die untere Lagerplatte (6) anschließenden topfförmigen Gehäuse (7), einem Innenhohlraum, der durch die Innenwandungen (23) der hohlzylindrischen Tragfeder (1) und des topfförmigen Gehäuses (7) gebildet ist, einer querverlaufenden, elastischen Wandung (10), die den Innenhohlraum in eine obere Kammer (8) und eine untere Kammer (9) unterteilt und randseitig eingespannt ist, einem zentral im Innenhohlraum verlaufenden Bolzen (11), der mit der oberen Lagerplatte (4) und der querverlaufenden Wandung (10) verbunden ist, wobei die Kammern zur zusätzlichen hydraulischen Dämpfung mit Flüssigkeit gefüllt sind und die elastische Wandung (10) mit einer die Kammern (8,9) verbindenden Überströmöffnung (14) versehen ist, dadurch gekennzeichnet, daß in dem topfförmigen Gehäuse (7) eine querverlaufende, mit einer Öffnung (19) versehene Anschlagplatte (18) vorgesehen ist, an die steuerbar eine am topfförmigen Gehäuse (7) elastisch befestigte Steuerplatte (25) anlegbar ist.

2. Motorlager nach Anspruch (1), dadurch gekennzeichnet, daß die Steuerplatte (25) randseitig einen Elastomerring (26) aufweist, der formschlüssig zwischen der Anschlagplatte (18) und dem topfförmigen Gehäuse (7) verspannt ist.

3. Motorlager nach Anspruch 1 oder 2, dadurch gekennzeichnet, daß die Steuerplatte (25) pneumatisch oder hydraulisch steuerbar ist.

4. Motorlager nach Anspruch 3, dadurch gekennzeichnet, daß das topfförmige Gehäuse mit einer Öffnung (30) für das Steuermedium versehen ist.

5. Motorlager nach einem der Ansprüche 1 bis 4, dadurch gekennzeichnet, daß die Tragfeder (1) in mehreren Ebenen angeordnete, radial verlaufende Kanäle (2) aufweist, die randseitig offen sind und eine venturiförmige Querschnittsform besitzen.

6. Motorlager nach einem der Ansprüche 1 bis 5, dadurch gekennzeichnet, daß die elastische Wandung (10) einen mittleren, verdickten, und am Bolzen (11) festgelegten Bereich (12) mit mindestens einer axial verlaufenden Überströmöffnung (14) und im radial äußeren Bereich (13) eine flexible, auswölbbare Wandung aufweist, die mit geringerer Stärke, jedoch hoher Volumensteifigkeit, ausgebildet ist.
